(19) Europäisches Patentamt
European Patent Office
Office européen des brevets

(11) **EP 4 498 050 A1**

(12) **EUROPEAN PATENT APPLICATION**
published in accordance with Art. 153(4) EPC

(43) Date of publication:
**29.01.2025 Bulletin 2025/05**

(21) Application number: **23878935.8**

(22) Date of filing: **26.09.2023**

(51) International Patent Classification (IPC):
*G01J 1/42* (2006.01)     *G01J 1/04* (2006.01)

(52) Cooperative Patent Classification (CPC):
**G01J 1/04; G01J 1/42**

(86) International application number:
**PCT/CN2023/121719**

(87) International publication number:
**WO 2024/082942 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **20.10.2022   CN 202222788599 U**

(71) Applicant: **Shenzhen Goodix Technology Co., Ltd.
Shenzhen, Guangdong 518045 (CN)**

(72) Inventors:
• **LI, Fulin
  Shenzhen, Guangdong 518045 (CN)**
• **ZHONG, Songjin
  Shenzhen, Guangdong 518045 (CN)**

(74) Representative: **Kraus & Lederer PartGmbB
Thomas-Wimmer-Ring 15
80539 München (DE)**

(54) **AMBIENT LIGHT SENSOR AND ELECTRONIC DEVICE**

(57)     The present disclosure provides an ambient light sensor and an electronic device that can improve detection accuracy of an ambient light sensor under a display screen. The ambient light sensor includes: a light filter unit array including a plurality of light filter units, the plurality of light filter units including a red filter unit, a green filter unit, and a blue filter unit; and a pixel unit array located below the light filter unit array and including a plurality of pixel units, the plurality of pixel units being configured to receive a light signal of ambient light after passing through the display screen and the plurality of light filter units; the number of blue filter units is larger than the number of red filter units, and a gravity center of a pattern formed by the red filter unit, a gravity center of a pattern formed by the green filter unit, and a gravity center of a pattern formed by the blue filter unit among the plurality of light filter units coincide with each other.

<u>110</u>

FIG. 4

EP 4 498 050 A1

## Description

The present disclosure claims priority to Chinese Application No. 202222788599.2 filed on 20 October 2022 and titled "AMBIENT LIGHT SENSOR AND ELECTRONIC DEVICE", which is incorporated herein by reference in its entirety.

## TECHNICAL FIELD

Embodiments of the present disclosure relate to the field of optical sensors, and more specifically relate to an ambient light sensor and an electronic device.

## BACKGROUND

With the development of electronic devices, such as mobile phones, tablet computers, and other smart terminal devices, an ambient light sensor has gradually become a standard sensor configured to detect an ambient light intensity in an environment where a smart terminal device is located. The ambient light intensity has a variety of uses, for example, brightness of a display screen of the terminal device can be automatically adjusted following the ambient light intensity, to improve user experience on the terminal device.

In order to reduce the space occupied by the ambient light sensor in an electronic device, the ambient light sensor can be arranged under a display screen of the electronic device. However, due to the difference in transmittance of the display screen to light in different wavebands, the detection accuracy of the ambient light sensor is affected. Therefore, how to improve detection accuracy of an ambient light sensor under a display screen has become a technical problem to be urgently solved.

## SUMMARY

Embodiments of the present disclosure provide an ambient light sensor and an electronic device that can improve detection accuracy of an ambient light sensor under a display screen.

In a first aspect, an ambient light sensor is provided. The ambient light sensor is adapted to be arranged under a display screen of an electronic device, and includes:

a light filter unit array, where the light filter unit array includes a plurality of light filter units, the plurality of light filter units include a red filter unit, a green filter unit, and a blue filter unit, the red filter unit is configured to allow for transmittance of red light signals, the green filter unit is configured to allow for transmittance of green light signals, and the blue filter unit is configured to allow for transmittance of blue light signals; and

a pixel unit array located below the light filter unit array and including a plurality of pixel units, the plurality of pixel units being configured to receive a light signal of ambient light after passing through the display screen and the plurality of light filter units, for ambient light detection;

where the number of the blue filter units is larger than the number of the green filter units, the number of the green filter units is larger than the number of the red filter units, and a gravity center of a pattern formed by the red filter unit, a gravity center of a pattern formed by the green filter unit, and a gravity center of a pattern formed by the blue filter unit among the plurality of light filter units coincide with each other.

In an implementation, the gravity center of the pattern formed by the red filter unit, the gravity center of the pattern formed by the green filter unit, and the gravity center of the pattern formed by the blue filter unit are located in a center region of a pattern jointly formed by the red filter unit, the green filter unit, and the blue filter unit.

In an implementation, the light filter unit array includes a sub-array composed of the red filter unit, the green filter unit, and the blue filter unit, and the center region of the pattern jointly formed by the red filter unit, the green filter unit, and the blue filter unit is a center region of the sub-array.

In an implementation, the number of the blue filter units is twice or more than twice as much as the number of the red filter units.

In an implementation, the number of the green filter units is located between the number of the blue filter units and the number of the red filter units.

In an implementation, the light filter unit array further includes a wide band light filter unit configured to allow for transmittance of a visible light signal and an infrared light signal.

In an implementation, the wide band light filter unit is not adjacent to the red filter unit, the wide band light filter unit is not adjacent to the green filter unit, and the wide band light filter unit is not adjacent to the blue filter unit; or a spacing between the wide band light filter unit and the red filter unit, a spacing between the wide band light filter unit and the green filter unit, and a spacing between the wide band light filter unit and the blue filter unit are each larger than or equal to a preset value, which is, e.g., 80 um.

In an implementation, the light filter unit array further includes a light shielding unit configured to block or adsorb a light signal.

In an implementation, the light shielding unit is not adjacent to the wide band light filter unit, and the light shielding unit is not adjacent to the red filter unit; or, a spacing between the light shielding unit the wide band light filter unit, and a spacing between the light shielding unit and the red filter unit are each larger than or equal to a preset value, which is, e.g., 80 um.

In an implementation, a size of the red filter unit, a size of the green filter unit, and a size of the blue filter unit are larger than or equal to 160 um; and a spacing between two adjacent light filter units among the red filter unit, the green filter unit, and the blue filter unit is larger than or equal to 40 um.

In an implementation, a size of the red filter unit, a size of the green filter unit, and a size of the blue filter unit are larger than or equal to 200 um; and a spacing between two adjacent light filter units among the red filter unit, the green filter unit, and the blue filter unit is larger than or equal to 50 um.

In an implementation, the light filter unit array further includes a visible light filter unit configured to allow for transmittance of a visible light signal.

In an implementation, the light filter unit array is composed of M lines of light filter units and N rows of light filter units, where the visible light filter unit, the wide band light filter unit, and the light shielding unit are located on an edge of the light filter unit array, and M and N are each a positive integer greater than 1.

In an implementation, M=3, N=4, light filter units in a 1st line of the light filter unit array are sequentially a wide band light filter unit, a red filter unit, a blue filter unit, and a green filter unit; light filter units in a 2nd line are sequentially a visible light filter unit, a green filter unit, a blue filter unit, and a blue filter unit; and light filter units in a 3rd line are sequentially a light shielding unit, a blue filter unit, a green filter unit, and a red filter unit.

In an implementation, M=3, N=4, light filter units in a 1st line of the light filter unit array are sequentially a visible light filter unit, a green filter unit, a blue filter unit, and a blue filter unit; light filter units in a 2nd line are sequentially a wide band light filter unit, a red filter unit, a green filter unit, and a red filter unit; and light filter units in a 3rd line are sequentially a light shielding unit, a blue filter unit, a blue filter unit, and a green filter unit.

In an implementation, the pixel unit includes a photodiode (PD), and a PD is arranged below each light filter unit in the light filter unit array.

In a second aspect, an electronic device is provided, including: a display screen; and the ambient light sensor according to the above first aspect or any one possible implementation in the first aspect arranged below the display screen.

Based on the above-mentioned technical solutions, the ambient light sensor includes a light filter unit array and a pixel array thereunder, and a proportion of blue filters in the light filter unit array is larger than a proportion of red filters, thereby improving the detection effects of the ambient light sensor for blue light signals, making the blue light signal amount in an equivalent level to the red light signal amount, enabling a gravity center of a pattern formed by the red filter unit, a gravity center of a pattern formed by the green filter unit, and a gravity center of a pattern formed by the blue filter unit to coincide with each other through a reasonable layout of light filters of different colors, achieving same detection effects of the ambient light sensor for screen light leakage in all directions, ensuring the uniformity of ambient light detection, and improving the detection performance of the ambient light sensor.

**BRIEF DESCRIPTION OF DRAWINGS**

FIG. 1 is a possible schematic diagram of an electronic device adaptable to an embodiment of the present disclosure.

FIG. 2 is a schematic diagram of transmittance of a screen to light in different wavelengths.

FIG. 3 is a schematic block diagram of an ambient light sensor in an embodiment of the present disclosure.

FIG. 4 is a schematic diagram of a possible light filter unit array in an embodiment of the present disclosure.

FIG. 5 is a schematic diagram of another possible light filter unit array in an embodiment of the present disclosure.

**DESCRIPTION OF EMBODIMENTS**

Technical solutions of the present disclosure will be described below with reference to the drawings.

An ambient light sensor (ALS) of an embodiment of the present disclosure can be applied to various electronic devices, and are particularly adapted to computers and peripherals thereof, communications, consumer-electronics, and other 3C electronic products, for example, smart phones, notebook computers, tablet computers, smart wearable devices, household appliances, game devices, etc. In addition, the ambient light sensor can also be applied to other types of electronic devices, such as automotive electronics.

In some embodiments, the ambient light sensor may be arranged between a middle frame and a display screen of an electronic device, and is located below cover glass (CG) of the electronic device, to implement ambient light detection in an environment where the electronic device is located. In some other embodiments, the ambient light sensor may also be arranged in a local region below the display screen of the electronic device, thereby forming an apparatus for detecting under-display ambient light.

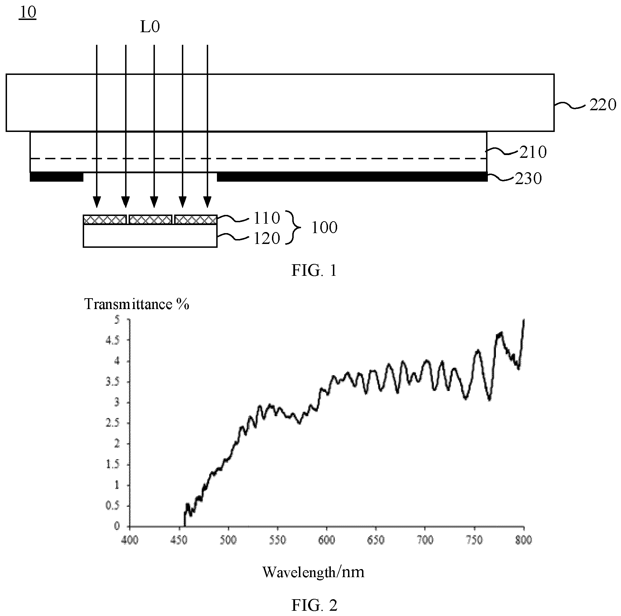

FIG. 1 shows a schematic diagram of an electronic device 10 adaptable to the present disclosure. As shown in FIG. 1, in the electronic device 10, an ambient light sensor 100 is arranged below a display region of a display screen 210 for detecting ambient light L0 through the display screen 210. The display screen 210 may be a self-luminous display screen, such as an organic light emitting diode (OLED) display screen; or the display screen 210 may be a passively luminous display screen, such as a liquid crystal display (LCD) screen.

Optionally, as shown in FIG. 1, a cover plate 220 is provided above the display screen 210. The cover plate 220 may be made of a transparent hard material such as glass or resin, and may be configured to protect the display screen 210.

Optionally, as shown in FIG. 1, a protective layer 230 is provided below the display screen 210. The protective layer 230 serves as a rear panel of the display screen 210, and is usually a light shielding black sheet layer or a printed layer. At least a partial region of the protective layer 230 includes a metal material for heat dissipation; and the protective layer 230 may further include a material such as a foam layer for buffering and protection.

The protective layer 230 is provided with a window, and the ambient light sensor 100 is arranged below the window. The ambient light L0 sequentially passes through the cover plate 220, the display screen 210, and the window in the protective layer 230, and is collected by the ambient light sensor 100 for ambient light detection.

In addition, the display screen 210 further includes stacked layers such as a semiconductor circuit, an organic material, a polarizer, a polyimide (PI) film, and an optically clear adhesive (OCA) layer.

The above-mentioned various stacked layers finally lead to significant differences in the transmittance for light signals in different wavebands of ambient light. For example, as shown in FIG. 2, the display screen 210 has poor transmittance for a blue light waveband and good transmittance for a red light waveband.

Optionally, as shown in FIG. 1, the ambient light sensor 100 includes a light filter unit array 110 and a pixel unit array 120. The light filter unit array 110 includes color filters (CF) of different colors. Each color filter is configured to allow for transmittance of light signals at a corresponding wavelength, and the transmitted light signals are received by a pixel unit thereunder for ambient light detection. The display screen 210 has poor transmittance for the blue light waveband, and therefore has poor detection effects for blue light signals, thereby affecting the detection performance of the ambient light sensor 100.

Therefore, the present disclosure provides an ambient light sensor that increases the proportion of blue filters and reduces the proportion of red filters, thereby improving the detection effects of the ambient light sensor for blue light signals, achieving same detection effects of screen light leakage in all directions through a reasonable layout of light filters of different colors, and ensuring the uniformity of ambient light detection.

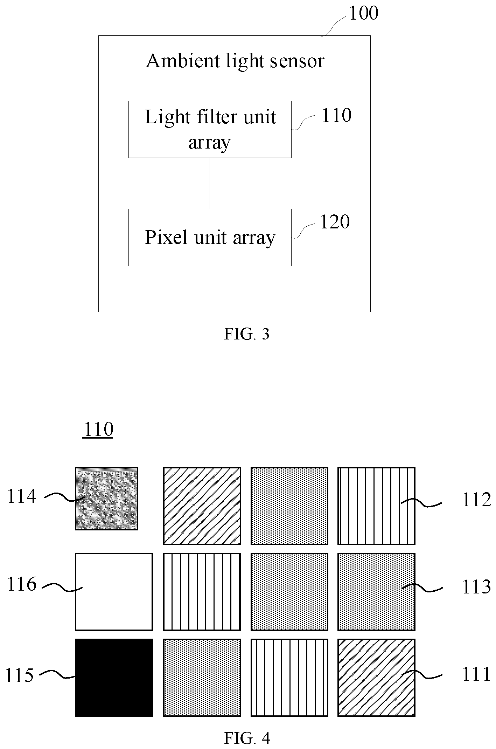

FIG. 3 is a schematic block diagram of an ambient light sensor in an embodiment of the present disclosure. As shown in FIG. 3, the ambient light sensor 100 is configured to be arranged below a display screen 210 of an electronic device. The ambient light sensor 100 includes a light filter unit array 110 and a pixel unit array 120. The pixel unit array 120 is located below the light filter unit array 110. For example, the light filter unit array 110 may be prepared on an upper surface of the pixel unit array 120 through a semiconductor manufacturing process, so that the light filter unit array 110 is located above the pixel unit array 120. Each light filter unit is configured to allow for transmittance of light signals in a corresponding waveband. The light filter unit may also be referred to as a light filter or light filter layer.

The light filter unit array 110 includes a plurality of light filter units, the plurality of light filter units include a red filter unit 111, a green filter unit 112, and a blue filter unit 113, where the red filter unit 111 is configured to allow for transmittance of red light signals, the green filter unit 112 is configured to allow for transmittance of green light signals, and the blue filter unit 113 is configured to allow for transmittance of blue light signals.

Here, the red filter unit 111 is also referred to as an R channel, that is, a CF that only allows for transmittance of red light signals; the green filter unit 112 is also referred to as a G channel, that is, a CF that only allows for transmittance of green light signals; and the blue filter unit 113 is also referred to as a B channel, that is, a CF that only allows for transmittance of blue light signals.

The pixel unit array 120 includes a plurality of pixel units, and is configured to receive a light signal of ambient light after passing through the display screen 210 and the light filter unit array 110, for ambient light detection.

The pixel unit includes, for example, a photoelectric sensing device such as a photodiode (PD) or a phototriode. A pixel unit is provided below each light filter unit in the light filter unit array 110, or a plurality of pixel units may be provided below each light filter unit, and a pixel unit corresponding to each light filter unit is configured to detect a light signal transmitted through the light filter unit.

In the embodiment of the present disclosure, among the plurality of light filter units of the light filter unit array 110, the number of blue filter units 113 is larger than the number of red filter units 111; and among the plurality of light filter units, a gravity center of a pattern formed by the red filter unit 111, a gravity center of a pattern formed by the green filter unit 112, and a gravity center of a pattern formed by the blue filter unit 113 coincide or substantially coincide with each other.

For example, the gravity center of the pattern formed by the red filter unit 111, the gravity center of the pattern formed by the green filter unit 112, and the gravity center of the pattern formed by the blue filter unit 113 are located in a center region of a pattern jointly formed by the red filter unit 111, the green filter unit 112, and the blue filter unit 113.

Further, the light filter unit array 110 includes a sub-array composed of the red filter unit 111, the green filter unit 112, and the blue filter unit 113. In this case, the center region of the pattern jointly formed by the red filter unit 111, the green filter unit 112, and the blue filter unit 113 is a center region of the sub-array.

Preferably, the number of blue filter units 113 is more than twice as much as the number of red filter units 111, to ensure that a signal amount of the blue light signals is at a same magnitude as a signal amount of the red light signals.

In some implementations, the number of green filter units 112 is located between the number of blue filter units 113 and the number of red filter units 111, that is, the number of blue filter units 113>the number of green filter units 112>the number of red filter units 111.

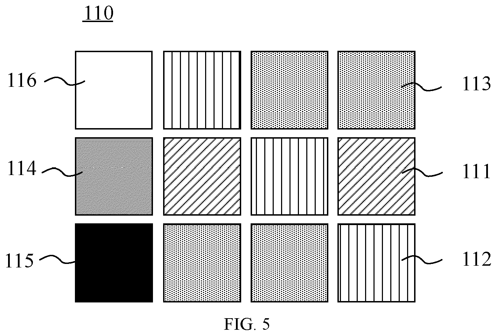

The light filter unit array 110 is composed of M lines of light filter units and N rows of light filter units, where M and N are each a positive integer greater than 1. FIGS. 4 and 5 show two possible arrangements of the light filter unit array 110 respectively. M=3 and N=4 are taken as examples in FIGS. 4 and 5.

As shown in FIG. 4, in the light filter unit array 110, the number of blue filter units 113 is 4, the number of green filter units 112 is 3, and the number of red filter units 111 is 2. A center region of the light filter unit array 110 is a center region of a pattern formed by all red filter units 111, green filter units 112, and blue filter units 113, that is, a region where a blue filter unit 113 in a 2nd line and a 2nd last row is located. As can be seen from FIG. 4, a gravity center of a triangular pattern formed by the 4 blue filter units 113 is located in this center region; a gravity center of a triangular pattern formed by the 3 green filter units 112 is located in this center region; and a gravity center of a linear pattern formed by the 2 red filter units 111 is located in this center region.

As shown in FIG. 5, in the light filter unit array 110, the number of blue filter units 113 is 4, the number of green filter units 112 is 3, and the number of red filter units 111 is 2. A center region of the light filter unit array 110 is a center region of a pattern formed by all red filter units 111, green filter units 112, and blue filter units 113, that is, a region where a green filter unit 112 in a 2nd line and a 2nd last row is located. As can be seen from FIG. 5, a gravity center of a quadrangular pattern formed by the 4 blue filter units 113 is located in this center region; a gravity center of a linear pattern formed by the 3 green filter units 112 is located in this center region; and a gravity center of a linear pattern formed by the 2 red filter units 111 is located in this center region.

Since the display screen 210 is refreshed line by line for image display, in order to reduce the impact of screen light leakage on the ambient light sensor 100, usually, light filter units in each row of the light filter unit array 110 aligned with a line scan direction of the display screen 210 need to include a red filter unit 111, a green filter unit 112, and a blue filter unit 113. When the display screen 210 refreshes each line of luminous pixels, corresponding pixel units of the red filter unit 111, the green filter unit 112, and the blue filter unit 113 among light filter units in each row can simultaneously collect light signals to facilitate accurate detection of light leakage of the display screen 210, and improve the ambient light detection accuracy of the ambient light sensor 100.

For example, an arrangement direction of light filter units in each line of the light filter unit array 110 shown in FIG. 4 is aligned with the line scan direction of the display screen 210. Generally, the light filter units in each line need to include a red filter unit 111, a green filter unit 112, and a blue filter unit 113. However, in the embodiment of the present disclosure, a proportion of the red filter units 111 to the blue filter units 113 is changed by replacing a red filter unit 111 in the 2nd line with the blue filter unit 113, to ensure the detection effects of the ambient light sensor 100 for the blue light signals, so that the blue light signal amount is in an equivalent level to the red light signal amount.

For another example, an arrangement direction of the light filter units in each row of the light filter unit array 110 shown in FIG. 5 is aligned with the line scan direction of the display screen 210. Generally, the light filter units in each row need to include a red filter unit 111, a green filter unit 112, and a blue filter unit 113. However, in the embodiment of the present disclosure, a proportion of the red filter units 111 to the blue filter units 113 is changed by replacing the red filter unit 111 in a 2nd row with the blue filter unit 113, to ensure the detection effects of the ambient light sensor 100 for the blue light signals, and make the blue light signal amount in an equivalent level to the red light signal amount.

Hence, in the embodiment of the present disclosure, the proportion of the blue filter units 113 in the light filter unit array 110 is larger than the proportion of the red filter units 111, thereby improving the detection effects of the ambient light sensor 100 for the blue light signals, and making the blue light signal amount in an equivalent level to the red light signal amount; enabling a gravity center of a pattern formed by the red filter unit 111, a gravity center of a pattern formed by the green filter unit 112, and a gravity center of a pattern formed by the blue filter unit 113 to substantially coincide with each other through a reasonable layout of light filter units of different colors, achieving the same detection effects of the ambient light sensor 100 for screen light leakage in all directions, and ensuring the uniformity of ambient light detection. Therefore, the ambient light sensor 100 in the embodiment of the present disclosure has better detection performance.

In addition, since a ratio B/R between red light signals transmitted through the red filter unit 111 and blue light signals transmitted through the blue filter unit 113 is usually used for detecting a color temperature of ambient light, there is a positive correlation between the B/R and the color temperature, and the color temperature, such as a correlated color temperature (CCT), of the ambient light can be determined based on a curve or formula for identifying a relationship between the B/R and the color temperature. Therefore, increasing the proportion of the blue filter units 113 and reducing the proportion of the red filter units 11 is also conductive to improving the color temperature detection accuracy. Based on the detected color temperature of the ambient light, the color temperature of the display screen 210 may be adjusted.

In addition, light signals transmitted through the green filter unit 112 can be used for detecting an illuminance of the ambient light, thereby adjusting brightness of the display screen 210 based on the illuminance of the ambient light.

Specifically, light signals of three primary colors in the ambient light, namely red (Red, R), green (Green, G), and blue (Blue, B), stimulate photoreceptor cells of human eyes, and three stimulus values XYZ can be obtained, where the stimulus value Y is used for characterizing the illuminance of the ambient light. As an example, a transformation relationship between RGB signal amounts and stimulus values XYZ can be expressed by the following formula:

$$\begin{bmatrix} X \\ Y \\ Z \end{bmatrix} = \begin{bmatrix} 0.4124 & 0.3576 & 0.1805 \\ 0.2126 & 0.7152 & 0.0722 \\ 0.0193 & 0.1192 & 0.9505 \end{bmatrix} \begin{bmatrix} R \\ G \\ B \end{bmatrix}。$$

It can be seen that the stimulation value Y mainly depends on a signal amount of green light signals in the ambient light. Therefore, green light signals transmitted through the green filter unit 112 can be used for detecting the illuminance of the ambient light.

The red filter unit 111, the green filter unit 112, and the blue filter unit 113 each need to have a certain size, to obtain a most sufficient signal amount, and ensure the detection effects. Further, in order to adapt to photosensitivity of the human eyes, and avoid occurrence of crosstalk of light signals between two adjacent light filter units, a certain spacing is required between two adjacent light filter units.

Therefore, in an implementation, a size of the red filter unit 111, a size of the green filter unit 112, and a size of the blue filter unit 113 are each larger than or equal to 160 um. In this case, optionally, a spacing between two adjacent light filter units among the red filter unit 111, the green filter unit 112, and the blue filter unit 113 may be larger than or equal to 40 um. The red filter unit 111, the green filter unit 112, and the blue filter unit 113 are each a square, of which a side length may be larger than or equal to 160 um; or, the red filter unit 111, the green filter unit 112, and the blue filter unit 113 are each a rectangle, of which a long side and a short side may both be larger than or equal to 160 um.

In another implementation, a size of the red filter unit 111, a size of the green filter unit 112, and a size of the blue filter unit 113 are each larger than or equal to 200 um. In this case, optionally, a spacing between two adjacent light filter units among the red filter unit 111, the green filter unit 112, and the blue filter unit 113 may be larger than or equal to 50 um. The red filter unit 111, the green filter unit 112, and the blue filter unit 113 are each a square, of which a side length may be larger than or equal to 200 um; or, the red filter unit 111, the green filter unit 112, and the blue filter unit 113 are each a rectangle, of which a long side and a short side may both be larger than or equal to 200 um.

It should be understood that the size of and the spacing between light filter units can be selected based on actual applications. For example, if RGB signal amounts transmitted through the light filter units are directly used to compute the color temperature and the illuminance of the ambient light, the size of the red filter unit 111, the size of the green filter unit 112, and the size of the blue filter unit 113 each may be selected to be larger than or equal to 160 um, and the spacing between two adjacent light filter units thereamong may be selected to be larger than or equal to 40 um, to satisfy the requirements for detecting ambient light based on RGB values. For another example, by providing a special light path structure above or below the light filter unit, the ambient light sensor can directly detect tristimulus values XYZ of the ambient light, and then compute the color temperature and the illuminance of the ambient light based on the tristimulus values XYZ. In this case, the size of the red filter unit 111, the size of the green filter unit 112, and the size of the blue filter unit 113 each may be selected to be larger than or equal to 200 um, and the spacing between two adjacent light filter units thereamong may be selected to be larger than or equal to 50 um, to adapt to the size of the light path structure, thereby satisfying the requirements for detecting the ambient light based on the XYZ values. In addition to the above-mentioned red filter unit 111, green filter unit 112, and blue filter unit 113, in some implementations, the light filter unit array 110 further includes a wide band light filter unit 114, where the wide band light filter unit 114 is configured to allow for transmittance of visible light signals and infrared light signals. Here, the wide band light filter unit 114 is also referred to as a W channel, and may be, for example, a light filter unit without CF processing such as a transparent light filter unit.

Since an infrared light signal can be transmitted through the wide band light filter unit 114, and the infrared light signal has strong penetrating power, in order to prevent the infrared light signal transmitted through the wide band light filter unit 114 from resulting in crosstalk on the light signals transmitted through the red filter unit 111, the green filter unit 112, and the blue filter unit 113, the wide band light filter unit 114 needs to be as far away from the red filter unit 111, the green filter unit 112, and the blue filter unit 113 as possible.

In an implementation, the wide band light filter unit 114 is not adjacent to the red filter unit 111, the wide band light filter unit 114 is not adjacent to the green filter unit 112, and the wide band light filter unit 114 is not adjacent to the blue filter unit 113.

In another implementation, a spacing between the wide band light filter unit 114 and the red filter unit 111, a spacing between the wide band light filter unit 114 and the green filter unit 112, and a spacing between the wide band light filter unit 114 and the blue filter unit 113 are each larger than or equal to a preset value. Optionally, the preset value is greater than or equal to 80 um.

For example, as shown in FIG. 4, a spacing between the wide band light filter unit 114 and a red filter unit 111 adjacent to its right side is increased, to prevent the infrared light signal transmitted through the wide band light filter unit 114 from resulting in crosstalk on the light signal transmitted through the red filter unit 111.

In some implementations, the light filter unit array 110 further includes a light shielding unit 115, where the light shielding unit 115 is configured to block or absorb a light signal. Since any light signal cannot be transmitted through the light shielding unit 115, a signal detected by a pixel unit corresponding to the light shielding unit 115 reflects circuit noise and temperature drift of the ambient light sensor in a lightless environment, thereby reducing the interference of the circuit noise and temperature drift in the signal.

Similarly, in order to prevent the infrared light signal transmitted through the wide band light filter unit 114 from resulting in failure of the light shielding unit 115, the wide band light filter unit 114 needs to be as far away from the light shielding unit 115 as possible.

In an implementation, a spacing between the light shielding unit 115 and the wide band light filter unit 114 and a spacing between the light shielding unit 115 and the red filter unit 111 are each larger than or equal to a preset value. Optionally, the preset value is greater than or equal to 80 um.

In another implementation, the light shielding unit 115 is not adjacent to the wide band light filter unit 114, and the light shielding unit 115 is not adjacent to the red filter unit 111.

For example, as shown in FIG. 4, the wide band light filter unit 114 is not adjacent to the light shielding unit 115, that is, the wide band light filter unit 114 and the light shielding unit 115 are spaced apart.

In some implementations, the light filter unit array 110 further includes a visible light filter unit 116, where the visible light filter unit 116 is configured to allow for transmittance of visible light signals.

The infrared light signal transmitted through the wide band light filter unit 114 has relatively little impact on the visible light filter unit 116, and they may be adjacent or may not be adjacent or a certain spacing may be maintained therebetween. For example, as shown in FIG. 4, not only is the spacing between the wide band light filter unit 114 and the red filter unit 111 increased, but also a spacing between the wide band light filter unit 114 and the visible light filter unit 116 can be increased. When the light filter unit array 110 is designed, it is necessary to preferentially consider that the wide band light filter unit 114 is far away from the red filter unit 111, the green filter unit 112, the blue filter unit 113, and the light shielding unit 115.

Here, the visible light filter unit 116 is also referred to as a channel C, which is configured to allow for transmittance of visible light signals, or referred to as white light signals. For example, the visible light filter unit 116 may be provided with an infrared cutoff filter layer to block infrared light signals. Different from the visible light filter unit 116, the wide band light filter unit 114 can not only allow for transmittance of visible light signals, but also allow for transmittance of infrared light signals. In some implementations, based on the light signals transmitted through the wide band light filter unit 114 and the visible light filter unit 116, a signal amount of the infrared light signals in the ambient light can be determined, so as to correct or optimize the detection results of the ambient light sensor 100, and improve the detection accuracy of the ambient light sensor 100.

The visible light filter unit 116, the wide band light filter unit 114, and the light shielding unit 115 may be located on an edge of a light shielding unit 115 array. For example, as shown in FIGS. 4 and 5, the visible light filter unit 116, the wide band light filter unit 114, and the light shielding unit 115 are each located on a left edge of the light filter unit array 110, and the number of each is 1.

In FIG. 4, light filter units in a 1st line of the light filter unit array 110 are sequentially a wide band light filter unit 114, a red filter unit 111, a blue filter unit 113, and a green filter unit 112; light filter units in a 2nd line are sequentially a visible light filter unit 116, a green filter unit 112, a blue filter unit 113, and a blue filter unit 113; and light filter units in a 3rd line are sequentially a light shielding unit 115, a blue filter unit 113, a green filter unit 112, and a red filter unit 111.

In FIG. 5, light filter units in a 1st line of the light filter unit array 110 are sequentially a visible light filter unit 116, a green filter unit 112, a blue filter unit 113, and a blue filter unit 113; light filter units in a 2nd line are sequentially a wide band light filter unit 114, a red filter unit 111, a green filter unit 112, and a red filter unit 111; and light filter units in a 3rd line are sequentially a light shielding unit 115, a blue filter unit 113, a blue filter unit 113, and a green filter unit 112.

In addition to the light filter unit array 110 shown in the above-mentioned FIG. 4 and FIG. 5, the light filter unit array 110 in the ambient light sensor 100 in the embodiment of the present disclosure may further have other arrangements to satisfy at least one of the following conditions:

(1) the number of blue filter units 113>the number of green filter units 112>the number of red filter units 111;

(2) the gravity center of the pattern formed by the red filter unit 111, the gravity center of the pattern formed by the green filter unit 112, and the gravity center of the pattern formed by the blue filter unit 113 coincide or substantially coincide with each other, for example, they are all located in the center region of the light filter unit array 110;

(3) sizes of the red filter unit 111, the green filter unit 112, and the blue filter unit 113 satisfy predetermined requirements, and the spacing between adjacent light filter units satisfies predetermined requirements;

(4) the wide band light filter unit 114 is as far away from the light shielding unit 115 as possible; and

(5) the wide band light filter unit 114 is as far away from the red filter unit 111, the green filter unit 112, and the blue filter unit 113 as possible.

When the light filter unit array 110 of the ambient light sensor 100 is designed, the above-mentioned conditions (1) to (3) may be preferentially considered, such as the light filter unit shown in FIG. 5; then the conditions (4) and (5) may be considered, such as the light filter unit shown in FIG. 4; and in addition, other conditions that can improve the ambient light sensor 100 can also be considered.

The present disclosure further provides an electronic device, including a display screen 210 and the ambient light sensor 100 in any one of the above embodiments. The ambient light sensor 100 is arranged below the display screen 210.

The detection results of the ambient light sensor 100 can be used for adjusting optical parameters of the display screen 210. For example, a color temperature of the display screen 210 is adjusted based on a color temperature of ambient light detected by the ambient light sensor 100, brightness of the display screen 210 is adjusted based on an illuminance of the ambient light detected by the ambient light sensor 100, and so on. The ambient light sensor 100 in the embodiment of the present disclosure can improve the uniformity of detection of light signals in different directions by the ambient light sensor below the display screen 210, and ensure the detection effects for blue light signals, so that a blue light signal amount is in an equivalent level to a red light signal amount, thus having better detection performance.

It should be noted that the embodiments in the present disclosure and/or the technical features in the embodiments may be randomly combined with each other on a non-conflict basis, and the combined technical solutions should also fall into the scope of protection of the present disclosure.

The above described apparatus embodiments are merely illustrative, the division of the units is only a logical function division, other division manners may be available during actual implementations, and a plurality of units or components may be combined or may be integrated into another system. In addition, the coupling between the units or the coupling between the components may be direct coupling or indirect coupling, and the above-mentioned coupling includes electrical, mechanical, or other forms of connection.

It should be understood that the specific examples in the embodiments of the present disclosure are provided only to help those skilled in the art to better understand the embodiments of the present disclosure, rather than limiting the scope of the embodiments of the present disclosure. Those skilled in the art may make various improvements and modifications on the basis of the above embodiments, and these improvements or modifications all fall within the scope of protection of the present disclosure.

While the above description merely provides specific embodiments of the present disclosure, the scope of protection of the present disclosure is not limited to the specific embodiments. Any person skilled in the present technical field can easily conceive of alterations or replacements within the technical scope disclosed in the present disclosure. All these alterations or replacements should be encompassed within the scope of protection of the present disclosure. Therefore, the scope of protection of the present disclosure should be determined by the scope of protection of the appended claims.

**Claims**

1.  An ambient light sensor, wherein the ambient light sensor is adapted to be arranged under a display screen of an electronic device, and comprises:

    a light filter unit array comprising a sub-array composed of a red filter unit, a green filter unit, and a blue filter unit, and
    a pixel unit array located below the light filter unit array and comprising a plurality of pixel units, the plurality of pixel units being configured to receive a light signal of ambient light after passing through the display screen and the light filter unit array, for ambient light detection;
    wherein a gravity center of a pattern formed by the red filter unit in the sub-array, a gravity center of a pattern formed by the green filter unit in the sub-array, and a gravity center of a pattern formed by the blue filter unit in the sub-array coincide with each other, and an arrangement direction of light filter units in each line or each row of the light filter unit array is aligned with a line scan direction of the display screen.

2.  The ambient light sensor according to claim 1, wherein the gravity center of the pattern formed by the red filter unit, the gravity center of the pattern formed by the green filter unit, and the gravity center of the pattern formed by the blue filter unit are located in a center region of the sub-array.

3.  The ambient light sensor according to claim 1, wherein the light filter unit array is an array composed of M lines×N rows of light filter units, wherein the light filter unit array further comprises a visible light filter unit, a wide band light filter unit, and a light shielding unit, the visible light filter unit, the wide band light filter unit, and the light shielding unit are located on an edge of the light filter unit array, and M and N are each a positive integer greater than 1; and
the wide band light filter unit is configured to allow for transmittance of a visible light signal and an infrared light signal.

4. The ambient light sensor according to claim 3, wherein a spacing between the wide band light filter unit and the adjacent red filter unit thereof is larger than a spacing between the red filter unit and the adjacent blue filter unit thereof, or a spacing between the wide band light filter unit and the adjacent red filter unit thereof is larger than a spacing between the red filter unit and the adjacent green filter unit thereof;

the light shielding unit is arranged non-adjacent to the wide band light filter unit, and the light shielding unit is arranged non-adjacent to the red filter unit; and
a spacing between the wide band light filter unit and the adjacent visible light filter unit thereof is larger than a spacing between the visible light filter unit and other light filter units adjacent to the visible light filter unit.

5. The ambient light sensor according to any one of claims 1 to 4, wherein a number of the blue filter units is larger than a number of the red filter units, and the number of the blue filter units is twice or more than twice as much as the number of the red filter units.

6. The ambient light sensor according to any one of claims 1 to 4, wherein a number of the green filter units is located between the number of the blue filter units and the number of the red filter units.

7. The ambient light sensor according to any one of claims 1 to 4, wherein a size of the red filter unit, a size of the green filter unit, and a size of the blue filter unit are larger than or equal to 160 um; and a spacing between two adjacent light filter units among the red filter unit, the green filter unit, and the blue filter unit is larger than or equal to 40 um.

8. The ambient light sensor according to claim 1 or 2, wherein the light filter unit array further comprises a wide band light filter unit configured to allow for transmittance of a visible light signal and an infrared light signal.

9. The ambient light sensor according to claim 8, wherein

the wide band light filter unit is not adjacent to the red filter unit, the wide band light filter unit is not adjacent to the green filter unit, and the wide band light filter unit is not adjacent to the blue filter unit; or
a spacing between the wide band light filter unit and the red filter unit, a spacing between the wide band light filter unit and the green filter unit, and a spacing between the wide band light filter unit and the blue filter unit are each larger than or equal to a preset value of 80 um.

10. The ambient light sensor according to claim 8, wherein the light filter unit array further comprises a light shielding unit configured to block or absorb a light signal.

11. The ambient light sensor according to claim 10, wherein

the light shielding unit is not adjacent to the wide band light filter unit, and the light shielding unit is not adjacent to the red filter unit; or
a spacing between the light shielding unit and the wide band light filter unit and a spacing between the light shielding unit and the red filter unit are each larger than or equal to a preset value of 80 um.

12. The ambient light sensor according to claim 10, wherein the light filter unit array further comprises a visible light filter unit configured to allow for transmittance of a visible light signal, and a spacing between the wide band light filter unit and the visible light filter unit adjacent to the wide band light filter unit is larger than a spacing between the visible light filter unit and other light filter units adjacent to the visible light filter unit.

13. The ambient light sensor according to any one of claims 1 to 4, wherein the pixel unit comprises a photodiode (PD), and the PD is arranged below each light filter unit in the light filter unit array.

14. An electronic device, comprising:

a display screen; and
the ambient light sensor according to any one of claims 1 to 13 provided below the display screen.

10

L0

220

210

230

110
120

100

FIG. 1

Transmittance %

5
4.5
4
3.5
3
2.5
2
1.5
1
0.5
0

400    450    500    550    600    650    700    750    800

Wavelength/nm

FIG. 2

100

Ambient light sensor

Light filter unit array — 110

Pixel unit array — 120

FIG. 3

110

114 ~

116 ~

115 ~

112

113

111

FIG. 4

110

116

114

115

113

111

112

FIG. 5

## INTERNATIONAL SEARCH REPORT

| International application No. |
| --- |
| **PCT/CN2023/121719** |

### A. CLASSIFICATION OF SUBJECT MATTER

G01J1/42(2006.01)i; G01J1/04(2006.01)i

According to International Patent Classification (IPC) or to both national classification and IPC

### B. FIELDS SEARCHED

Minimum documentation searched (classification system followed by classification symbols)

IPC: G01J

Documentation searched other than minimum documentation to the extent that such documents are included in the fields searched

Electronic data base consulted during the international search (name of data base and, where practicable, search terms used)

CNABS; CNTXT; CNKI; VEN; ENTXT; WPABS: 传感器, 环境光, 滤光, 滤波, 像素, 重心, 中心, 距离, 间距, 红外, sensor, center, distance, IR, filter

### C. DOCUMENTS CONSIDERED TO BE RELEVANT

| Category* | Citation of document, with indication, where appropriate, of the relevant passages | Relevant to claim No. |
| --- | --- | --- |
| PX | CN 218349631 U (SHENZHEN GOODIX TECHNOLOGY CO., LTD.) 20 January 2023 (2023-01-20) description, paragraphs [0034]-[0097], and figures 1-5 | 1-14 |
| Y | CN 216978134 U (SHENZHEN GOODIX TECHNOLOGY CO., LTD.) 15 July 2022 (2022-07-15) description, paragraphs [0036]-[0124], and figures 1-12 | 1-3, 5-14 |
| Y | CN 111989690 A (SHENZHEN GOODIX TECHNOLOGY CO., LTD.) 24 November 2020 (2020-11-24) description, paragraphs [0041]-[0152], and figures 1-10 | 1-3, 5-14 |
| Y | CN 216770790 U (SHENZHEN GOODIX TECHNOLOGY CO., LTD.) 17 June 2022 (2022-06-17) description, paragraphs [0035]-[0136], and figures 1-10 | 1-3, 5-14 |
| A | CN 107560727 A (ROHM CO., LTD.) 09 January 2018 (2018-01-09) entire document | 1-14 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

Information on patent family members

International application No.

**PCT/CN2023/121719**

| Patent document cited in search report | | | Publication date (day/month/year) | Patent family member(s) | Publication date (day/month/year) |
|---|---|---|---|---|---|
| CN | 218349631 | U | 20 January 2023 | None | |
| CN | 216978134 | U | 15 July 2022 | None | |
| CN | 111989690 | A | 24 November 2020 | None | |
| CN | 216770790 | U | 17 June 2022 | None | |
| CN | 107560727 | A | 09 January 2018 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202222788599